Europäisches Patentamt

(19) European Patent Office

Office européen des brevets

(11) Numéro de publication : **0 062 559 B1**

(12) **FASCICULE DE BREVET EUROPÉEN**

(45) Date de publication du fascicule du brevet :
25.07.84

(21) Numéro de dépôt : 82400517.7

(22) Date de dépôt : 23.03.82

(51) Int. Cl.³ : **C 01 B 15/023**

(54) **Amélioration au procédé de fabrication cyclique du peroxyde d'hydrogène.**

(30) Priorité : 07.04.81 FR 8106923

(43) Date de publication de la demande :
13.10.82 Bulletin 82/41

(45) Mention de la délivrance du brevet :
25.07.84 Bulletin 84/30

(84) Etats contractants désignés :
**AT BE DE FR GB IT NL SE**

(56) Documents cités :
FR-A- 1 458 818
FR-A- 1 498 406

(73) Titulaire : **P C U K PRODUITS CHIMIQUES UGINE KUHLMANN**
**Service Propriété Industrielle Tour Manhattan**
**F-92087 Paris La Défense 2 Cedex 21 (FR)**

(72) Inventeur : **Coingt, Michel**
**48, rue Juliette Récamier**
**F-69006 Lyon (FR)**

(74) Mandataire : **Dorland, Anne-Marie et al**
**ATOCHEM Service Propriété Industrielle Tour Manhattan Cedex 21**
**F-92091 Paris la Défense (FR)**

## Description

La présente invention concerne un perfectionnement au procédé cyclique de fabrication du peroxyde d'hydrogène.

Les procédés cycliques classiques de fabrication du peroxyde d'hydrogène consistent essentiellement à hydrogéner une ou plusieurs alkylanthraquinones dissoutes dans un solvant non miscible à l'eau, de manière à les transformer en alkylhydroanthraquinones ; à traiter ensuite le milieu réactionnel par un gaz contenant de l'oxygène de manière à former du peroxyde d'hydrogène tandis qu'on régénère les alkylanthraquinones de départ ; à extraire enfin par de l'eau le peroxyde d'hydrogène de la solution de quinones, avant de renvoyer cette dernière à l'étape d'hydrogénation.

Dans les descriptions d'un tel procédé, on inclut généralement, sous le nom d'anthraquinones des anthraquinones dites « vraies » à substituants aliphatiques et des hydroanthraquinones, telles que les dérivés tétrahydrogénés des précédentes.

Dans de tels procédés il est bien connu que si les intermédiaires actifs ont été introduits dans le cycle sous la forme anthraquinone vraie, celle-ci se transforme progressivement en forme tétrahydrogénée au cours des recyclages successifs de la solution.

La proportion atteinte par la forme tétrahydrogénée est variable et dépend des conditions de travail à tous les stades du procédé de fabrication.

On sait aussi en effet, que d'autres réactions indésirables transforment les intermédiaires actifs en produits inactifs dont une partie est reconvertible en intermédiaires actifs, cette reconversion pouvant être effectuée par divers procédés dans le cycle ou en dehors du cycle.

Il faut noter que ces procédés sont susceptibles d'influer eux-mêmes sur la proportion de tétrahydroanthraquinone, et que c'est donc de l'ensemble des conditions de travail que dépend la proportion des anthraquinones vraies et de leurs dérivés tétrahydrogénés.

Dans le brevet français n° 1 498 406 de la Société OXYSYNTHESE couvrant un procédé semblable à ce qui vient d'être décrit, on utilise un mélange d'anthraquinones constitué de Ethyl-2 anthraquinone et de éthyl-2-tétrahydro-5,6,7,8 anthraquinone, désignés respectivement par les symboles EAQ et $H_4EAQ$. Dans ce brevet les conditions de travail sont ajustées de façon à ce que la proportion de $H_4EAQ$ soit d'environ 90 % du mélange des deux anthraquinones. Le taux de conversion à l'hydrogénation est voisin de 90 % et la solution contient une proportion importante de produits inactifs, dérivés des deux anthraquinones mises en œuvre. Cette proportion de préférence supérieure à 150 g/l permet d'obtenir des productivités dépassant 13 g $H_2O_2$/l.

La présence de ces produits inactifs augmente la solubilité des formes anthraquinones et anthrahydroquinones et par conséquent la concentration équivalente de la solution en peroxyde d'hydrogène.

Cependant, bien que ces produits aient un rôle utile, leur accumulation au-delà de la limite choisie constitue une perte d'intermédiaire productif qui implique une dépense assez importante.

La présente invention fournit une amélioration au procédé cyclique de production de peroxyde d'hydrogène décrit dans le brevet français 1 498 406 dans laquelle l'anthraquinone introduite au cours des cycles successifs pour compenser les pertes en intermédiaire actif est exclusivement la éthyl-2-tétrahydro-5,6,7,8 anthraquinone.

Un objet de la présente invention est de réduire les pertes en intermédiaire actif et d'améliorer les conditions de fonctionnement du cycle de production dans le cadre de l'invention du brevet français 1 498 406.

La présente invention fournit donc un procédé cyclique de fabrication de peroxyde d'hydrogène à l'aide d'un intermédiaire actif constitué de EAQ et de $H_4EAQ$, mélangés à divers produits inactifs résultant de la transformation des intermédiaires actifs, l'ensemble étant dissous dans un solvant constitué d'acétate de méthylcyclohexyle et d'hydrocarbure benzénique à 9 atomes de carbone, dans lequel le taux de conversion du mélange des quinones est supérieur à 80 %, le procédé étant caractérisé par le fait qu'on introduit pour compenser la disparition d'intermédiaire actif, ce dernier sous la forme de $H_4EAQ$ et exclusivement sous cette forme.

L'introduction de $H_4EAQ$ selon la présente invention, au lieu de l'EAQ présente des avantages appréciables, comme cela est illustré par les exemples ci-après.

1. A production égale de peroxyde d'hydrogène, une plus faible dégradation du mélange des quinones, d'où il résulte une économie sur la consommation de quinone.

2. Une plus faible quantité de catalyseur mis en jeu, ce qui se traduit par une économie de retraitement du catalyseur.

3. Une plus grande régularité de fonctionnement de l'unité de production de peroxyde d'hydrogène, ce qui entraîne un certain nombre d'économies d'exploitation.

Ces avantages n'étaient pas prévisibles :

— en ce qui concerne le premier avantage, il faut noter que les concentrations des deux formes EAQ et $H_4EAQ$ sont, à l'équilibre, peu différentes si on introduit dans le système la $H_4EAQ$ ou la EAQ. Il s'ensuit que les mêmes réactions de dégradation devraient se produire sensiblement aux mêmes vitesses. Or, il n'en est rien, et on constate, dans le cadre de l'invention comme le montrent les exemples cités, que l'économie de quinone peut approcher 40 % ;

— le second avantage pourrait résulter de l'aptitude connue de la H₄EAQ de se réduire en hydroquinone à une vitesse supérieure à la vitesse de réduction de la EAQ. Ici encore, la faible différence de composition s'oppose à cet argument et on observe pratiquement que l'économie de catalyseur est particulièrement sensible dans les périodes qui suivent les additions de H₄EAQ. Globalement, on peut constater une réduction de la consommation qui peut atteindre 30 % ;

— le troisième avantage résulte d'une stabilité plus grande des concentrations en quinones et il est une conséquence des deux précédents.

La mise en œuvre selon l'invention permet donc de maintenir un taux de conversion élevé des anthraquinones dans des conditions beaucoup plus économiques que dans le cas d'introduction de EAQ.

### Exemple 1

Une solution de travail contient, après plusieurs années d'utilisation pour produire H₂O₂ : H₄EAQ : 80 g/l ; EAQ : 10 g/l ; produit de dégradation de ces deux anthraquinones : 150 g/l.

Deux fractions égales de cette solution sont placées dans deux unités identiques, de production de peroxyde d'hydrogène, désignées par A et B.

Les conditions de travail sont identiquement :

— t° d'hydrogénation et d'oxydation : 65 °C
— t° d'extraction : 25 °C
— catalyseur d'hydrogénation : Palladium déposé sur silico-aluminate de sodium, à raison de 2 % de métal
— taux de conversion des anthraquinones en anthrahydroquinones : en moyenne de 86 %.

On utilise un dispositif de reconversion situé, sur le trajet de la solution, après l'extraction de H₂O₂ et avant l'hydrogénation, et consistant en une colonne contenant un hydro-alumino-silicate de sodium.

La seule différence d'exploitation entre les unités A et B est que, pour maintenir la teneur en anthraquinone à 90 g/l, on ajoute chaque fois que celle-ci est ≤ 87 g/l des quantités de l'ordre de 5 à 10 g/l :

— de H₄EAQ sur l'unité A
— de EAQ sur l'unité B

Après un mois de fonctionnement continu, on constate les différences suivantes :

| Unité | A | B |
|---|---|---|
| Teneur moyenne en H₄EAQ g/l | 82 | 78 |
| Teneur moyenne en EAQ g/l | 8 | 12 |
| Productivité du catalyseur (H₂O₂/catalyseur) % B | 125 | 100 |
| Vitesse moyenne d'accumulation des dégradés en g/l/jour | 0,6 | 0,8 |

On voit que dans les conditions de travail mises en œuvre, y compris celles de la reconversion, l'emploi de H₄EAQ (A) au lieu de EAQ (B) réduit la consommation d'anthraquinone de 25 % et celle du catalyseur de 20 %.

### Exemple 2

On opère comme pour l'exemple 1, avec au départ la même solution de travail et dans les mêmes conditions d'exploitation, à la différence près qu'il n'y a de dispositif de reconversion ni sur A, ni sur B.

Après un mois de fonctionnement, on constate les différences suivantes :

| Unité | A | B |
|---|---|---|
| Productivité du catalyseur (H₂O₂/catalyseur) % B | 129 | 100 |
| Vitesse moyenne d'accumulation des dégradés en g/l/jour | 2,6 | 4,2 |

On voit que, sans dispositif de reconversion, l'emploi de H₄EAQ au lieu de EAQ réduit la consommation d'anthraquinone de 38 % et celle de catalyseur de 22,5 %.

**Revendication**

Procédé cyclique de production de peroxyde d'hydrogène à l'aide d'un mélange d'anthraquinones dissoutes dans un solvant, mélange constitué de éthyl-2-tétrahydro-5,6,7,8 anthraquinone et de éthyl-2-anthraquinone et de leurs produits de dégradation et d'un solvant mixte d'acétate de méthylcyclohexyle et d'alcoylbenzène en C₉, dans lequel le taux de conversion des anthraquinones en anthrahydroquinones est supérieur à 80 %, dans lequel la proportion de éthyl-2-tétrahydro-5,6,7,8 anthraquinone est voisine de 90 % des deux anthraquinones, et dans lequel la teneur en produits de dégradation des anthraquinones est supérieure à 150 g/l, caractérisé en ce que l'anthraquinone introduite au cours des cycles successifs, pour compenser les pertes en intermédiaire actif, est exclusivement la éthyl-2-tétrahydro-5,6,7,8 anthraquinone.

**Claim**

Cyclic process for the production of hydrogen peroxide with the aid of a mixture of anthraquinones dissolved in a solvent, the said mixture consisting of 2-ethyl-5,6,7,8-tetrahydro-anthraquinone and 2-ethylanthraquinone and their degradation products and a mixed solvent of methylcyclohexyl acetate and C₉-alkylbenzene, in which the degree of conversion of the anthraquinones to anthrahydroquinones is greater than 80 %, the proportion of 2-ethyl-5,6,7,8-tetrahydro-anthraquinone is about 90 % of the two anthraquinones, and the content of degradation products of the anthraquinones is greater than 150 g/litre, characterised in that the anthraquinone introduced during successive cycles, to compensate for the losses of active intermediate, is exclusively 2-ethyl-5,6,7,8-tetrahydro-anthraquinone.

**Anspruch**

Kreislaufprozeß zur Herstellung von Wasserstoffperoxid mit Hilfe eines Gemisches von in einem Lösungsmittel gelösten Anthrachinonen, wobei das Gemisch aus 2-Äthyl-5,6,7,8-tetrahydro-anthrachinon und 2-Äthyl-anthrachinon und deren Abbauprodukten und einem Mischlösungsmittel aus Methylcyclohexylacetat und C₉-Alkylbenzol besteht, der Umsatz der Anthrachinone zu Anthrahydrochinonen über 80 % ist, der Anteil der 2-Äthyl-5,6,7,8-tetrahydro-anthrachinone etwa 90 % der beiden Anthrachinone beträgt und der Gehalt an Abbauprodukten der Anthrachinone über 150 g/l liegt, dadurch gekennzeichnet, daß das während der aufeinanderfolgenden Kreisläufe zugegebene Anthrachinon zum Ausgleich der Verluste an aktivem Zwischenprodukt ausschließlich das 2-Äthyl-5,6,7,8-tetrahydro-anthrachinon ist.

4